# EUROPÄISCHE PATENTSCHRIFT

(11) **EP 0 490 360 B1**
(45) Veröffentlichungstag und Bekanntmachung des Hinweises auf die Patenterteilung: **13.07.1994**
(21) Anmeldenummer: 91121253.8
(22) Anmeldetag: 11.12.1991
(51) Int. Cl.: B29C 47/64, B29C 47/66

(54) **Verfahren und Extruder zur Verarbeitung und Herstellung von Kautschuk und thermoplastischen Kunststoffen**
Method and extruder for the processing and the manufacture of rubber and plastic materials
Procédé et extrudeuse pour le traitement et la fabrication de matières caoutchouteuses ou plastiques

(30) Priorität: 14.12.1990 DE 4039942; 29.04.1991 US 693221; 19.11.1991 DE 4137969
(43) Veröffentlichungstag der Anmeldung: 17.06.1992
(73) Patentinhaber: HERMANN BERSTORFF Maschinenbau GmbH, D-30627 Hannover (Kleefeld) (DE)
(72) Erfinder: Capelle, Gerd, Dipl.-Ing., W-3012 Langenhagen 6 (DE); Meier, Günther, W-3000 Hannover 91 (DE)

(56) Entgegenhaltungen:
- EP-A- 0 219 334
- EP-A- 0 336 702
- DE-B- 1 142 839
- FR-A- 2 358 191
- GB-A- 2 068 249
- US-A- 3 613 160
- US-A- 4 178 104
- PATENT ABSTRACTS OF JAPAN vol. 7, no. 187 (M-236)(1332) 16. August 1983 & JP-A-58 089 341 (TOSHIBA KIKAI K.K.) 27. Mai 1983

## Beschreibung

Die Erfindung betrifft ein Verfahren und einen Extruder zur Verarbeitung und Herstellung von Kautschuk und thermoplastischen Kunststoffen gemäß dem Oberbegriff der Ansprüche 1 und 2.

Als Austrags- und Homogenisierungsextruder sind in der Vergangenheit durchweg die sogenannten Stiftzylinderextruder eingesetzt worden. wie sie beispielsweise durch die DE-A-22 35 784 oder die DE-A-30 03 615 der Anmelderin bekannt sind. Weiterhin ist aus der JP-A-58-89341 ein Stiftzylinderextruder bekannt, mit mehreren nebeneinander radial angeordneten Stiftreihen. Bei Extrudern dieser Bauart ragen Metallstifte radial durch das Extrudergehäuse in den Verarbeitungsraum des Extruders, wobei die Extruderschnecke in dieser Zone unterbrochene Schneckenstege aufweist.

Diese Extruder zeichnen sich durch eine sehr hohe Ausstoßleistung und gute Homogenisierwirkung auf das zu verarbeitende Material aus und ermöglichen außerdem bei gleicher Schneckendrehzahl einen vergrößerten Materialdurchsatz pro Zeiteinheit im Vergleich zu konventionellen Kaltspeiseextrudern mit Scherteilschnecke.

Diese Vorzüge haben dazu geführt, daß Stiftzylinderextruder in den letzten 15 Jahren zu den am häufigsten eingesetzten Extrudern in der Gummiindustrie wurden.

Unabhängig davon wurde ein Extrudermischteil entwickelt, das als Transfermischteil bekannt geworden ist (DE-B-11 42 839). Dieses Mischteil ist im wesentlichen dadurch gekennzeichnet, daß sowohl die Extruderschnecke als auch die Innenwand des Extrudergehäuses über eine bestimmte Länge mit Nuten und Stegen versehen ist, wobei in Längsrichtung des Extrudergehäuses die Gangtiefe der Extruderschnecke in dem gleichen Maß bis auf Null abnimmt und anschließend wieder anwächst, wie die Gangtiefe der Gehäusenuten zunimmt bzw. wieder abnimmt. Durch diese Ausbildung von Extruderschnecke und -gehäuse wird ein vollständiger Extrudataustausch zwischen den Schneckennuten und den Gehäusenuten möglich, was eine gute Mischwirkung verursacht.

Der Transferextruder konnte gegenüber dem Stiftzylinderextruder einen gewissen Marktanteil für sich beanspruchen, insbesondere dann, wenn die Baulänge des Extruders klein gehalten werden sollte.

Zudem ist aus der US-A-3,613,160 bekannt, Extruder mit Drosselbauteilen zu versehen, mit denen der Extrudattransport im Extruder variabel von außen gesteuert werden kann. Gemäß dieser Druckschrift ist dazu auf dem Schneckenschaft der Extruderschnecke ein in etwa zylindrisches Bauteil angeordnet, das mit der Schnecke mitrotiert und den Verarbeitungsraum stromab vollständig versperrt. Im Bereich dieses zylindrischen Bauteils sind durch das Extrudergehäuse von außen zwei Drosselstifte radial in jeweils einen axial ausgerichteten richteten Überströmkanal geführt, der in die Innenwand des Extrudergehäuses hineingearbeitet ist.

Bei zurückgezogenen Drosselstiften kann ein Teil des sich stromauf des zylindrischen Bauteils befindlichen Extrudates durch diese Kanäle zum stromabwärtigen Extruderteil gelangen. Durch unterschiedlich tiefes Hineinfahren der Drosselstifte in diese Überströmkanäle, läßt sich dieser Extrudatstrom begrenzen.

Aus der EP-A-0 336 702 ist weiterhin bekannt, am austrittsseitigen Ende eines ein Transfermischteil aufweisenden Extruders ein Drosselelement anzuordnen.

Da sich die Technologie dieser Extruder, abgesehen von Detailverbesserungen, in den letzten 15 Jahren nicht verändert hat, lag der Erfindung die Aufgabe zugrunde, einen Misch- und Homogenisierungsextruder vorzustellen, der im Vergleich zu den bekannten Vorrichtungen bei verringerten Investitionskosten bei wenigstens gleich guter Mischwirkung eine erhöhte Ausstoßleistung ermöglicht, eine deutlich kürzere Baulänge sowie eine Ausweitung der bisherigen Einsatzgebiete von Misch- und Homogenisierungsextrudern erlaubt. Schließlich sollte die durch diesen Extruder leistbare Plastifizierungsarbeit in Abhängigkeit von den Eigenschaften des Extrudats frei einstellbar sein.

Diese Aufgabe wird erfindungsgemäß durch ein Verfahren nach Anspruch 1 und durch einen Extruder nach Anspruch 2 gelöst.

Durch die Verbindung der beiden bekannten Mischteilbauweisen konnte ein Extruder mit den Merkmalen des Hauptanspruchs geschaffen werden, der gegenüber den Misch- und Homogenisierungsextrudern nach dem Stand der Technik über erhebliche Vorteile verfügt.

So konnte mit einem über einen Stiftzylinderbereich und einen Transferbereich mit zusätzlichen Stiften verfügenden Extruder festgestellt werden, daß bei gleicher Mischqualität und gleicher Schneckendrehzahl die Antriebsleistung des Extruders bis zu 50 % verringert und der Massedurchsatz bis zu 60 % bis 100 % erhöht werden konnte.

Diese ausgezeichneten Ergebnisse bewirken ferner eine 50 %ige Reduzierung des Antriebsdrehmomentes, was bei der Herstellung des Extruders zu einer starken Verminderung der Getriebekosten führt. Zudem läßt sich durch die Verbindung der Stiftzylinder und der Transferteiltechnologie die für die gleiche Mischqualität notwendige Bauteillänge des Mischbereiches um ca. 50 % gegenüber einem Extruder verringern, der nur nach dem Stiftzylinderprinzip arbeitet.

Die Weiterentwicklung dieses Extrudertyps hat nun gezeigt, daß die Ausstoßleistung eines solchen Extruders weiter gesteigert werden kann, wenn im Stiftzylinder- und im Transferbereich ein statischer Extrudatdruck von 150 - 300 bar vorherrscht, der abhängig vom jeweiligen Extrudat vorzugsweise 200 - 250 bar beträgt.

Um unabhängig vom Öffnungsquerschnitt des Ausformwerkzeuges des Extruders und den Eigenschaften des Extrudates diesen statischen Druck einstellen zu können, ist erfindungsgemäß vorgesehen, am stromabwärtigen Ende des Extrudergehäuses und noch vor dem Ausformwerkzeug eine Vorrichtung zur Erzeugung und Einstellung dieses statischen Druckes vorzusehen.

Durch die Anordnung von verstellbaren Drosselstiften, die in dem Teil des Transferbereichs des Extrudergehäuses radial hineinragen, in dem die Gehäusegänge in etwa ihr größtes Gangvolumen aufweisen, läßt sich der vorgeschlagene Extruder für die Verarbeitung von unterschiedlichen Kautschukmischungen einstellen. Mit der Eindringtiefe der Drosselstifte in die Gehäusegänge und den Verarbeitungsraum des Extruders, läßt sich somit die Plastifizierleistung bzw. die im Transferteil umgesetzte Friktionsenergie für das Extrudat beliebig und mischungsbezogen vorwählen. Damit kann im Vergleich zu den bisher bekannten gattungsgemäßen Extrudern neben der Schneckendrehzahl und der Verfahrensteiltemperatur auf einen weiteren frei wählbaren Prozeßparameter zurückgegriffen werden.

Die Erfindung läßt sich anhand von Ausführungsbeispielen und mit Hilfe der Zeichnung erläutern.

Sie zeigt in
- Fig. 1: einen Längsschnitt durch einen Einschneckenextruder ohne Drosselstifte im Transferteil,
- Fig. 2: einen Längsschnitt durch einen Einschneckenextruder mit Drosselstiften im Transferteil,
- Fig. 3a-c: die graphische Darstellung von Versuchsergebnissen mit einem Extruder der vorgeschlagenen Bauweise im Vergleich zum konventionellen Stiftextruder, und
- Fig. 4: einen Extruder gemäß Fig. 1, jedoch mit einer Vorrichtung zur Erzeugung eines erhöhten statischen Extrudatdruckes.

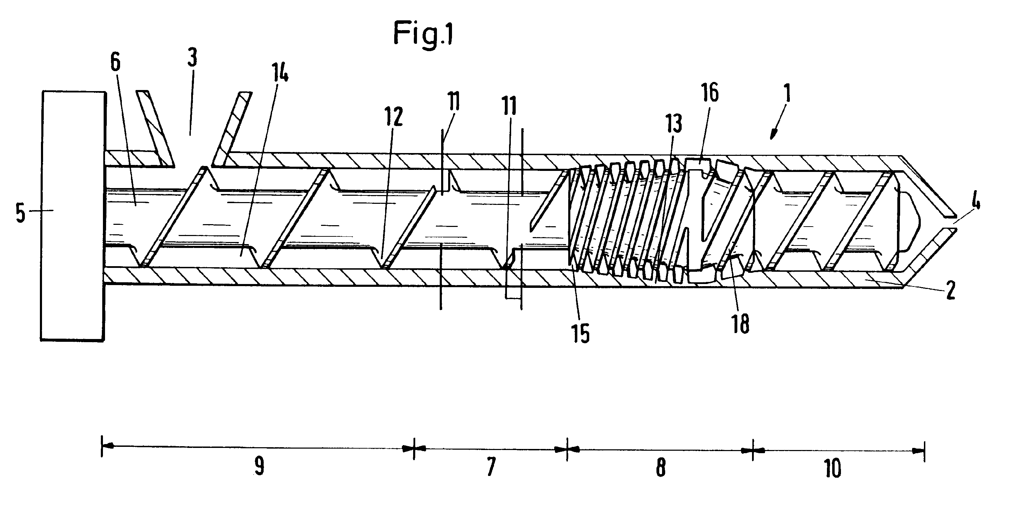

Figur 1 stellt einen schematischen Längsschnitt durch einen Einschneckenextruder 1 in der Bauform eines Stifttransferextruders dar. Innerhalb des Extrudergehäuses 2 ist eine Extruderschnecke 6 angeordnet, die von einer Antriebseinheit 5 um ihre Längsachse antreibbar ist. Das Gehäuse 2 hat im Bereich seines stromaufwärtigen Endes eine Einfüllöffnung 3 für das zu extrudierende Material, welches den Extruder fertig gemischt und homogenisiert durch die Auslaßöffnung 4 verläßt.

Die Extruderschnecke 6 weist im Einzugsbereich 9 eine Schneckengeometrie auf, die dazu geeignet ist, in an sich bekannter Weise das durch die Einfüllöffnung 3 zugeführte Material in den Extruder einzuziehen und zu plastifizieren.

Stromabwärts dieses Einzugsbereiches ist ein Stiftzylinderbereich 7 vorgesehen, in dem zwei Reihen von Stiften 11 radial durch das Extrudergehäuse 2 in Richtung Schneckenachse in den Verarbeitungsraum 14 des Extruders hineinragen. In diesem Bereich 7 sind die Schneckenstege 12 in bekannter Weise in der Stiftebene durchbrochen, um ein Kollidieren mit den Stiften 11 zu vermeiden.

Stromab des Stiftzylinderbereiches 7 ist ein Transferbereich 8 angeordnet, bei dem in diesem Ausführungsbeispiel die Winkel zwischen den Stegen 18 der Extruderschnecke 6 und den Stegen 13 des des Extrudergehäuses 2 größer oder gleich 105 ° sind. Der Transferbereich 8 läßt sich in einen Einlauf- und einen Auslaufbereich aufteilen, wobei beide Bereiche durch den Gehäusegang mit der größten Gangtiefe voneinander getrennt sind. In diesem Transferbereich 8 ist außerdem die Gangzahl im Ein- und Auslaufbereich konstant, wodurch die Anzahl der Stege im Ein- bzw. Auslaufbereich unabhängig von dem Gangquerschnitt im Gehäuse und der Schnecke sind.

Das letzte Verfahrensteil der Extruderschnecke 6 wird durch den Druckerhöhungsbereich 10 gebildet, in dem die Schneckengeometrie so gewählt ist, das in bekannter Weise der statische Schmelzedruck auf den notwendigen Werkzeugdruck anhebbar ist.

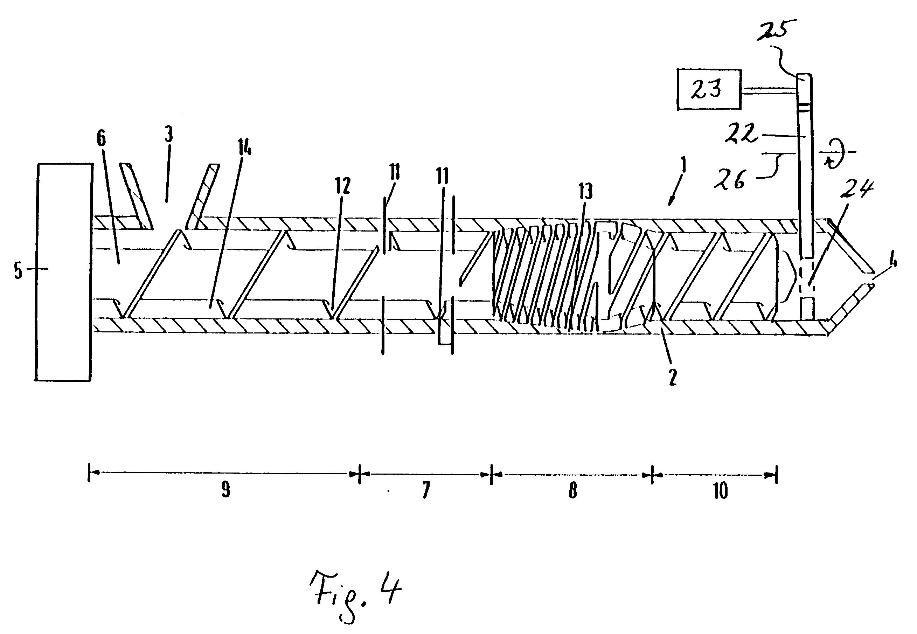

Stromab der Extruderschnecke 6 ist vor der Auslaßöffnung 4 eine Vorrichtung zur Erzeugung des gewünschten statischen Extrudatdruckes im Extrudergehäuse vorgesehen. Diese Vorrichtung besteht in der einfachsten Ausführungsform aus einer Scheibe 22, die über wenigstens eine Durchlaßöffnung 24 für das Extrudat verfügt und in den Verarbeitungsraum 14 des Extruders 1 derart hineinragt, daß der Durchlaßquerschnitt des Extrudergehäuses 2 verringerbar und damit der Extrudatdruck erhöhbar ist (Figur 4).

Wie der Darstellung entnehmbar ist, ist die Scheibe 22 um eine Drehachse 26 drehbar gelagert und kann mit Hilfe eines Motors 23 sowie eines auf eine Außenverzahnung der Scheibe 22 wirkendes Ritzel 25 so verstellt werden, daß Durchlaßöffnungen 24 unterschiedlicher Weite in den Extruder einfahrbar sind. Auf diese Weise kann der Durchlaßquerschnitt einfach und schnell auf unterschiedliche Extrudate oder Extrusionsbedingungen eingestellt werden.

In einem derart ausgestaltenen Extruder wird das Extrudat nach dem Einziehen in der Einzugszone und im Stiftzylinderbereich plastifiziert und gemischt und anschließend im Transferbereich homogenisiert. Dabei ist von besonderer Bedeutung, daß im Stift- und Transferbereich ein statischer Extrudatdruck von 150 - 300 bar vorherrscht. Im Druckerhöhungsbereich wird schließlich der Extrudatdruck auf den Werkzeugspritzdruck angehoben.

Die mit einem solchen Extruder durchgeführten Extrusionsversuche haben insbesondere bei der Verarbeitung von Kautschuk die Ausstoßleistung um weitere bis zu 20 % erhöht, was vor allem dadurch zu erklären ist, daß der Stiftzylinderbereich in Verbindung mit dem Transferbereich zum optimalen Betrieb offenbar einen vergleichsweise hohen statischen Extrudatdruck benötigt.

Neben diesem Ausführungsbeispiel sind auch andere Realisierungsmöglichkeiten für diesen Stifttransferextruder denkbar. So könnte beispielsweise der Transferbereich 8 auch stromaufwärts vom Stiftzylinderbereich 7 angeordnet sein, wenngleich die oben vorgestellte Variante die besseren Misch- und Homogenisierungsresultate erbringt. Außerdem sei hier angemerkt, daß der Stiftzylinderbereich auch mit mehr als zwei Stiftreihen seine Misch- und Homogenisierungsaufgabe erfüllt. In Bezug auf das Kosten-Mischungsgüte-Verhältnis ist der Stiftzylinderbereich am günstigsten mit ein bis fünf Stiftreihen auszustatten.

Die bevorzugte Länge der einzelnen Extruderbereiche beträgt bei einer Extruderlänge von 10 Schneckendurchmessern (D) etwa 3 D für den Einzugsbereich, 1,5 bis 10 D, vorzugsweise 1,5 bis 2 D für den Stiftzylinderbereich, 2 bis 2,5 D für den Transferbereich und ca. 3 D für den Druckaufbaubereich.

Unabhängig von diesen Angaben können aber auch noch je nach Bedarf zusätzliche Verfahrensbereiche vor, nach oder zwischen den Stiftzylinder- und Transferbereichen angeordnet werden, so z.B. Entgasungs- oder Knetbereiche.

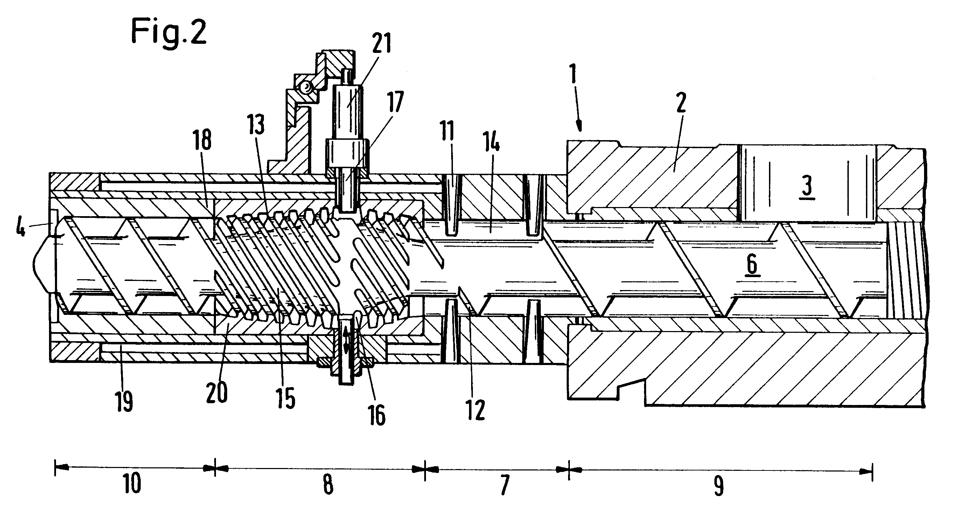

In Figur 2 ist ein Stifttransferextruder 1 mit Drosselstiften 11 im Transferbauteil dargestellt. Der Einfüllbereich 9 dieses Extruders entspricht auch hier dem üblichen Kaltspeise-Extruder und weist ein Verhältnis von Schneckenlänge zu Schneckendurchmesser (D) von drei auf.

Dem Einfüllbereich 9 nachgeordnet ist ein Extruderabschnitt von insgesamt 6 D Länge, in dem sich der Stiftzylinderbereich 7 mit zwei hintereinander angeordneten Stiftebenen mit Extruderstiften 11 befindet. Stromab des Stiftzylinderbereiches 7 ist der Transferbereich 8 mit etwa 2 D und der Druckaufbaubereich 9 mit etwa 1,5 D Länge vorgesehen.

Die Temperierung des Extruderzylinders 2 erfolgt in bekannter Weise durch Temperierungsbohrungen 19 in der Gehäusewand 2. Der Transferteil des Extrudergehäuses ist in diesem Ausführungsbeispiel als Gehäusebuchse 20 im Gehäuse 2 arretiert.

Die Steigung der Gänge von Extruderschnecke und Transferteil-Buchse sind so gewählt, daß die Stege zwischen der Schnecke und der Buchse einen Winkel von gleich oder mehr als 105 ° bilden. Daraus resultiert in vorteilhafter Weise, daß das Extrudat beim Passieren dieses Transferteiles, bedingt durch die sich daraus ergebende große Anzahl von Schnittpunkten zwischen Schnecken- und Buchsenstegen pro Schneckenumdrehung, einem intensiven Scherprozeß unterworfen wird.

Im Gegensatz zu den Schneckengängen sind die Buchsengänge im Transferteil nicht unterbrochen. Sie winden sich vielmehr kontinuierlich und stetig von der Einlaufzone des Transferteils bis zu seiner Auslaufzone in etwa zu- bzw. abnehmend spiralförmig um die gedachte Längsachse des Extruders.

Im ersten Drittel des Transferteiles wächst der Schneckenkerndurchmesser von der max. Gangtiefe bis auf den Außendurchmesser, d.h. das Gangvolumen der Schnecke 6 fällt vom Maximalwert im Einlaufbereich bis auf Null. Die Gangvolumina der Buchse 20 weisen die umgekehrte Tendenz auf. Somit wird das für das Extrudat effektiv vorhandene Durchtrittsvolumen in axialer und radialer Transportrichtung konstant gehalten. Zwangsläufig findet auf Grund dieser Gegebenheiten ein hundertprozentiger Extrudataustausch zwischen Schnecke 6 und Zylinderbuchse 20 statt.

Beim ca. 1,4 D langen Austrittsbereich des Transferteils gemäß Figur 2 nimmt das Gangvolumen der Schnecke 6 kontinuierlich zu und bei der Buchse 20 kontinuierlich ab, wobei wiederum das für das Extrudat vorhandene Gesamtgangvolumen von Schnecke und Buchse konstant gehalten wird.

Umfangreiche Untersuchungen hatten zum Ergebnis, das insbesondere bei der Verarbeitung von hochviskosen Naturkautschuk-Mischungen, das Vorplastifizieren des Extruders im Stiftbereich bei niedrigen Schergefällen vor der intensiven Plastizierarbeit im Transferteil sich sowohl ausstoßerhöhend als auch positiv auf das Pulsationsverhalten der Maschine auswirken.

Neben der Schneckendrehzahl und den Verfahrensteiltemperaturen verfügt die Maschine über einen weiteren Prozeßparameter, der frei vorwählbar ist und die Universalität der Maschine hinsichtlich der Verarbeitbarkeit einer großen Bandbreite von unterschiedlichen Kautschukmischungen erweitert.

Am Ende des ersten Drittels der Transferzone 8 befindet sich in dieser Ausführungsform ein Drosselelement, welches symmetrisch am Umfang des Transferbauteils verteilte Stifte 17 aufweist, die radial in die nicht unterbrochenen Gänge der Transferteilbuchse 20 eintauchen und das Gangvolumen der Buchse 20 in diesem Bereich vom Maximalwert bis auf Null reduzieren können.

Mit diesen Drosselstiften 17, die von außen entweder manuell oder hydraulisch verstellt werden, kann die Plastifizierleistung bzw. die im Transferteil umgesetzte Friktionsenergie für das Extrudat beliebig vorgegeben werden.

Diesen Drosselstiften 17 ist es u.a. zuzuschreiben, daß es mit dem Stifttransfer-Extruder erstmalig gelang, Kautschukmischungs-Qualitäten zu verarbeiten, die bislang mit Kaltspeiseextrusion, auch durch den Einsatz speziell optimierter Stiftzylinderextruder, nicht mit ausreichender Homogenität verarbeitbar waren. Es handelt sich dabei um Naturkautschuk-Qualitäten beispielsweise für die Herstellung von Panzerkettenstollen als auch Laufstreifenmischungen mit demselben Basispolymer für LKW- und EM-Reifen.

Faßt man die bisher mit einem Extruder der Bauart GE 150 STx9O erzielten Testergebnisse zusammen, so kann man feststellen, daß im Vergleich zum Stiftzylinder-Extruder bei niedrig viskosen Synthese-Kautschukmischungen bis zu Viskositäten von 55 bis 60 ML 1 + 4 (100°C) Ausstoßleistungssteigerungen von 25 % bis 50 % zu erzielen sind, bei einer Reduzierung der spezifischen Energie bis zu 20 %.

Bei hochviskosen, schwierig zu verarbeitenden Naturkautschukqualitäten zwischen 90 bis 120 ML 1 + 4 (100°C) sind die Vorteile noch relevanter, da, wie sich zeigte, beim Stiftzylinder-Extruder die Extrudathomogenitätsgrenze bereits bei ca. 800 - 1 000 kg/h Ausstoß erreicht wird und somit in Einzelfällen Leistungsverdoppelungen beim Stifttransfer-Extruder möglich erscheinen.

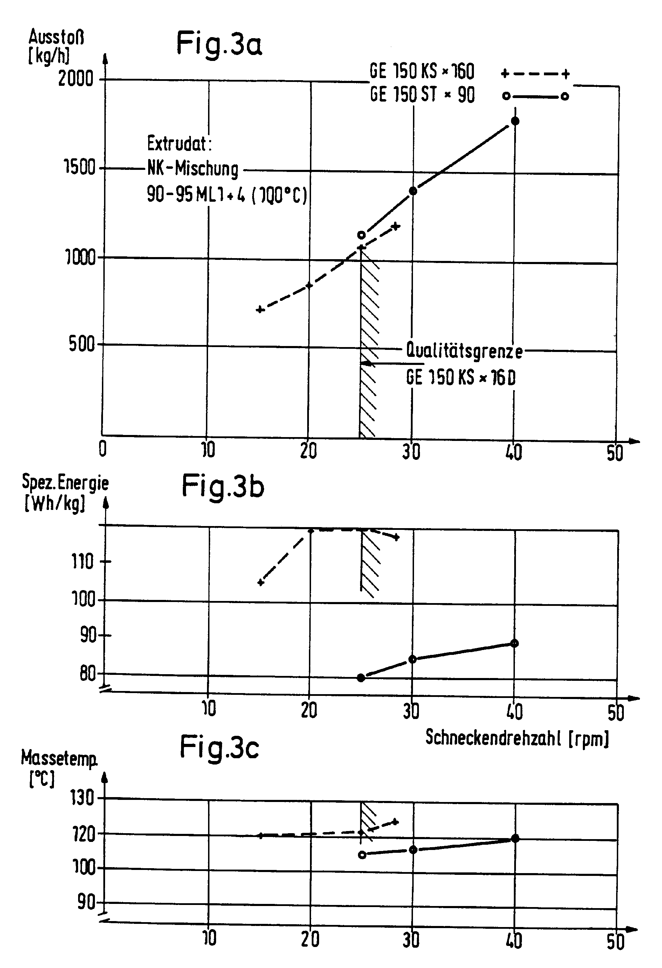

Die Figuren 3 a-c zeigen in graphischer Darstellung Versuchsergebnisse, die mit einem Extruder nach dem Stand der Technik (gestrichelte Kurven) und einem Labor-Transferstiftextruder (durchgezogene Kurven) vergleichbarer Größe erzielt wurden. Als Extrudat wurde eine Naturkautschukmischung NK 90-95 ML 1 + 4 (100 °C) verwendet, die als hochviskos und besonders schwierig zu verarbeiten bekannt ist. In allen drei Darstellungen ist durch einen vertikalen Strich mit Schraffur die Drehzahl von 25 Umdrehungen pro Minute markiert, bis zu der herkömmliche Extruder mit vertretbarer Qualität eine solche Kautschukmischung verarbeiten konnten.

In Figur 3a ist der Kautschukausstoß in Abhängigkeit von der Schneckendrehzahl aufgetragen, während Figur 3b die Massetemperatur und Figur 3c den spezifischen Energiebedarf pro kg Extrudat jeweils als Funktion von der Schneckendrehzahl darstellt. Die Zusammenstellung dieser drei Graphiken zeigt, daß mit dem hier vorgeschlagenen Extruderkonzept bei ausgezeichneter Misch- und Homogenisierungswirkung ein hoher Extrudatausstoß bei vertretbarer Extrudattemperatur und erheblich verringerten Energieeinsatz möglich wird.

Ergänzend kam hinzu, daß Probleme mit Produktporosität im Profil, die beim Stiftzylinder-Extruder schon im unteren Leistungsbereich auftraten beim Stifttransfer-Extruder überhaupt nicht festzustellen waren.

Zudem soll darauf hingewiesen werden, daß der vorgeschlagene Stiftzylinderextruder mit oder ohne Drosselstifte im Transferteil verwendet werden kann, wenngleich bei der optimalen Bauform nicht auf Drosselstifte verzichtet werden sollte. Schließlich läßt sich mit ihrer Positionierung der Extruder auf die unterschiedlichsten Kautschukmischungen und deren Verarbeitungsparameter einstellen und damit universell durch den Anwender benutzen. In einer unvollkommenen

Ausführungsform können die verstellbaren Drosselstifte auch am stromabwärtigen Ende des Extruders, etwa am Ende des Druckaufbaubereiches 10, angeordnet sein.

## Patentansprüche

1. Verfahren zum Betrieb eines Extruders, welcher zur Verarbeitung und Herstellung von Kautschuk und thermoplastischen Kunststoffen dient und bei dem ein Stiftzylinderbereich und ein Transfermixbereich hintereinander angeordnet sind, bei dem das Extrudat in einem Extruder eingefüllt, eingezogen, plastifiziert, gemischt und ausgegeben wird,
gekennzeichnung durch die Verfahrensschritte,
- Mischen und/oder Homogenisieren des Extrudates in dem Stiftzylinderbereich des Extruders,
- Homogenisieren des Extrudates in dem Transferbereich des Extruders,
- Aufbauen des Werkzeugdruckes in einem Druckerhöhungsbereich des Extruders
- wobei der statische Extrudatdruck im gesamten Stiftzylinder- und Transferbereich zwischen 150 und 300 bar, vorzugsweise zwischen 200 bis 250 bar, beträgt.

2. Extruder zur Verarbeitung und Herstellung von Kautschuk und thermoplastischen Kunststoffen, bestehend aus einem Extrudergehäuse (2) mit einer Einlaß- und einer Auslaßöffnung (3, 4) sowie einem Antrieb (5) für eine im Verarbeitungsraum (14) des Gehäuses (2) um ihre Längsachse drehbar angeordnete Extruderschnecke (6), mit Stiftzylinder-, Transfermisch- und Drosselbereichen,
**dadurch gekennzeichnet**
daß der Extruder (1) über zwei hintereinander angeordnete Misch- und Homogenisierbereiche (7, 8,) verfügt, daß der eine Bereich als Stiftzylinderbereich (7) mit radial in den Verarbeitungsraum (14) des Gehäuses (2) hineinragenden Stiften (11) und in dem Bereich der Stifte (11) unterbrochenen Schneckenstegen (12) ausgebildet ist,
daß der andere Bereich als Transfermischbereich (8) ausgelegt ist, in dem die Extruderschnecke (6) von einem Einlaufbereich zu einem Auslaufbereich eine stetige Verringerung ihres Gangvolumens bis auf Null und dann eine Gangvolumenvergrößerung bis auf einen Maximalwert aufweist, und in dem das Extrudergehäuse (2) über ununterbrochene Gehäusegänge verfügt, die von dem Einlaufbereich zum Auslaufbereich des Transferteils hin ihr Gangvolumen von Null auf einen Maximalwert vergrößern, um anschließend wieder auf ein Gangvolumen von Null abzufallen, und in dem die Gehäusegänge wendelförmig um eine gedachte Extruderlängsachse geführt sind, und
daß stromab der Extruderschnecke (6) eine Vorrichtung zur Verringerung des Durchlaßquerschnittes des Verarbeitungsraumes (14) des Extruders (1) vorhanden ist.

3. Extruder nach Anspruch 2,
**dadurch gekennzeichnet,**
daß im Bereich des maximalen Gangvolumens der Gehäusegänge radial verstellbare Drosselstifte (17) durch das Gehäuse (2) und in die Gehäusegänge (16) sowie in den Verarbeitungsraum (14) hineinragbar angeordnet sind.

4. Extruder nach Anspruch 2,
**dadurch gekennzeichnet,**
daß der Stiftzylinderbereich (7) stromaufwärts vor dem Transferbereich (8) angeordnet ist.

5. Extruder nach Anspruch 2,
**dadurch gekennzeichnet,**
daß der Extruder stromauf der Misch- und Homogenisierungsbereiche (7, 8) über einen Einzugsbereich (9) und stromab über einen Bereich (10) verfügt, in dem das Extrudat auf den notwendigen Werkzeugdruck extrudierbar ist.

6. Extruder nach Anspruch 5,
**dadurch gekennzeichnet,**
daß bei einer vorzugsweisen Extruderlänge von 10 Schneckendurchmessern D der Einzugsbereich (9) 3 D, der Stiftzylinderbereich (7) 1,5 bis 2 D, der Transferbereich (8) bis 2,5 D und der Druckerhöhungsbereich (10) etwa 3 D lang ist.

7. Extruder nach den Ansprüchen 2 bis 6,
**dadurch gekennzeichnet,**
daß im Stiftzylinderbereich (7) vorzugsweise ein bis fünf Reihen Stifte (11) angeordnet sind.

8. Extruder nach den Ansprüchen 2 bis 7,
**dadurch gekennzeichnet,**
daß die verstellbaren Drosselstifte (17) am stromabwärtigen Ende des Extruders (1) angeordnet sind.

9. Extruder nach den Ansprüchen 2 bis 8,
**dadurch gekennzeichnet,**
daß die Drosselstifte (17) über mechanisch, pneumatisch oder hydraulisch betätigbare Stellvorrichtungen (21) verfügen, mit denen diese Stifte (17) über die volle Gehäusegangtiefe radial verstellbar sind.

10. Extruder nach den Ansprüchen 2 bis 9,
**dadurch gekennzeichnet**,
daß im Einlauf- und Auslaufbereich im Transferbereich (8) des Extruders die Gangzahl und somit die Anzahl der Schneckenstege (18) und der Gehäusestege (13) unabhängig von der Gehäuse- bzw. Schneckengangquerschnittsfläche konstant ist.

## Claims

1. A process for operating an extruder designed for processing and producing rubber compounds and thermoplastics and comprising a pin barrel section and a convert section arranged one behind the other, with the material being fed, taken in, plastified, mixed, and discharged,
characterized by the process steps,
- mixing and/or homogenizing of the material to be processed in the pin barrel section of the extruder;
- homogenizing of the material to be processed in the convert section of the extruder;
- building up of the extrusion tool pressure in a pressure build-up section of the extruder;
- with the static pressure in the entire pin barrel and convert section ranging between 150 and 300 bar, and preferably amounting to 200 to 250 bar.

2. Extruder for processing and producing rubber and thermoplastics, comprising an extruder housing (2) with an inlet and an outlet opening (3, 4), as well as a drive unit (5) for an extruder screw (6) that is arranged in the processing chamber (14) of the housing (2) such as to allow its rotation about its longitudinal axis, with pin barrel, convert, and throttle sections
**characterized in that**
the extruder (1) is provided with two mixing and homogenizing sections (7, 8) arranged one behind the other, that one section is designed as pin barrel section (7) with pins (11) projecting radially into the processing chamber (14) of the housing (2) and the screw flights (12) being interrupted in the area of the pins (11),
that the other section is designed as convert mixing zone (8) in which the extruder screw (6) has a channel volume that is continuously reduced down to zero from an inlet zone to an outlet zone and subsequently increased to the maximum value, and in which the extruder housing (2) is provided with non-interrupted housing flights, the channel volume of which continuously increases from zero to a maximum value from the inlet zone to the outlet zone and subsequently decreases again to zero, and in which the housing channels are led in the form of a spiral around an imaginary longitudinal extruder axis, and that a device for reducing the passage cross section of the processing chamber (14) of the extruder (1) is arranged downstream of the extruder screw (6).

3. Extruder as recited in claim 2,
**characterized in that**
radially adjustable throttle pins (17) projecting through the housing (2) into the housing channels (16) as well as into the processing chamber (14) are arranged in the area of the housing flights presenting the maximum channel volume.

4. Extruder as recited in claim 2,
**characterized in that**
the pin barrel section (7) is arranged upstream of the convert section (8).

5. An extruder as recited in claim 2,
**characterized in that**
upstream of the mixing and homogenizing sections (7, 8), the extruder is provided with an intake section (9), while downstream of the said sections it comprises a section (10) in which the material pressure can be increased to the required extrusion tool pressure.

6. An extruder as recited in claim 5,
**characterized in that**
at a preferred extruder length of 10 screw diameters D, the intake section (9) presents a length of 3 D, the pin barrel section (7) a length of 1.5 to 2 D, the convert section (8) a length of up to 2.5 D, and the pressure build-up section (10) a length of approximately 3 D.

7. An extruder as recited in claims 2 to 6,
**characterized in that**
the pin barrel section (7) is preferably provided with one to five rows of pins (11).

8. An extruder as recited in claims 2 to 7,
**characterized in that**
the adjustable throttle pins (17) are arranged at the downstream end of the extruder (1).

9. An extruder as recited in claims 2 to 8,
**characterized in that**
the throttle pins (17) are provided with mechanical, pneumatic or hydraulic adjusting devices (21) by means of which these pins (17) can be radially adjusted over the entire housing flight depth.

10. An extruder as recited in claims 2 to 9,
**characterized in that**
in the inlet and outlet zones of the convert section (8) of the extruder, the number of channels and thus the number of screw flights (18) and the housing flights (13) is constant and, thus, independent of the cross-sectional area of the housing or screw flights.

## Revendications

1. Procédé pour l'opération d'une extrudeuse qui sert à la transformation et production de caoutchouc et matières thermoplatiques, une partie de cylindre à picots et une partie Transfermix étant arrangées l'une après l'autre et la matière à extruder étant alimentée, introduite, plastifiée, mélangée et déchargée par une extrudeuse,
**caractérisé** par les étapes de procédé,
- mélangeage et/ou homogénéisation de la matière à extruder dans la partie de cylindre à picots de l'extrudeuse,
- homogénéisation de la matière à extruder dans la partie Convert de l'extrudeuse,
- établissement de la pression d'outil dans une zone de montée en pression de l'extrudeuse,
- la pression statique de la matière à extruder étant entre 150 et 300 bars, de préférence entre 200 à 250 bars pour toute la partie de cylindre à picots et la partie Convert.

2. Extrudeuse pour la transformation et production de caoutchouc et de matières thermoplastiques comprenant un carter d'extrudeuse (2) avec une ouverture d'entrée et une ouverture de sortie (3, 4) et un entraînement (5) pour une vis d'extrudeuse (6) qui peut être tournée autour de son axe longitudinal dans la chambre de transformation (14) du carter (2) ainsi que des parties de cylindre à picots, Convert et d'étranglement,
**caractérisée**
en ce que l'extrudeuse (1) est pourvue de deux parties de mélangeage et d'homogénéisation (7, 8) arrangées l'une derrière l'autre, en ce que l'une des parties est conçue comme partie de cylindre à picots (7) avec des picots (11) pénétrant radialement dans la chambre de transformation (14) du carter (2) et avec des filets de vis (12) intérrompus au niveau des picots (11),
en ce que l'autre partie est conçue comme partie Convert (8), dans laquelle la vis d'extrudeuse (6) présentant d'une zone d'entrée jusqu'à une zone de sortie une réduction continue du volume de filet jusqu'à zéro suivie d'une augmentation du volume de filet jusqu'à une valeur maximale et dans laquelle le carter d'extrudeuse (2) est pourvu de filets de carter ininterrompus qui, de la zone d'entrée jusqu'à la zone de sortie, agrandissent leur volume de filet de zéro jusqu'à une valeur maximale et diminuent ensuite leur volume de filet jusqu'à zéro et dans laquelle les filets de carter vont en spirale autour d'une axe longitudinale théorique de l'extrudeuse et en ce qu'en aval de la vis d'extrudeuse (6) est arrangé un appareil pour la réduction de la section de passage de la chambre de transformation (14) de l'extrudeuse (1).

3. Extrudeuse selon revendication 2,
**caractérisée en ce que**
au niveau du volume maximal des filets de carter sont arrangés des picots d'étranglement (17) ajustables radialement qui peuvent pénétrer à travers le carter (2) dans les filets de carter (16) ainsi que dans la chambre de transformation (14).

4. Extrudeuse selon revendication 2,
**caractérisée en ce que**
la partie de cylindre à picots (7) est arrangée en amont de la partie Convert (8).

5. Extrudeuse selon revendication 2,
**caractérisée en ce que**
l'extrudeuse est pourvue en amont de parties de mélangeage et d'homogénéisation (7, 8), d'une partie d'alimentation (9) et en aval d'une partie (10) servant à extruder la matière avec la pression d'outil nécessaire.

6. Extrudeuse selon revendication 5,
**caractérisée en ce que**
dans le cas d'une longueur d'extrudeuse préférée de 10 diamètres de vis D, la longueur de la partie d'alimentation (9) est 3 D, de la partie de cylindre à picots (7) 1,5 à 2 D, de la partie à Convert (8) jusqu'à 2,5 D et de la zone de montée en pression (10) environ 3 D.

7. Extrudeuse selon les revendications 2 à 6,
**caractérisée en ce que**
la partie de cylindre à picots (7) comprend de préférence une à cinq rangées de picots (11).

8. Extrudeuse selon les revendications 2 à 7,
**caractérisée en ce que**
les picots d'étranglement ajustables (17) sont arrangés à l'extrémité en aval de l'extrudeuse (1).

9. Extrudeuse selon les revendication 2 à 8,
**caractérisée en ce que**
les picots d'étranglement (17) sont équipés de dispositifs d'ajustage (21) mécanique, pneumatique ou hydraulique servant à ajuster radialement ces picots (17) sur toute la profondeur de filet du carter.

10. Extrudeuse selon les revendication 2 à 9,
**caractérisée en ce que**
dans les zones d'entrée et de sortie de la partie Convert (8) de l'extrudeuse, le nombre de filets et ainsi le nombre de filets de vis (18) et des filets du carter (13) sont constants indépendamment de la section de filet du carter et/ou de la vis.
